# EUROPEAN PATENT APPLICATION

(11) **EP 4 738 055 A1**
(43) Date of publication of application: **06.05.2026**
(21) Application number: 25209054.3
(22) Date of filing: 16.10.2025
(51) Int. Cl.: G06F 1/16, A45C 11/00, H04M 1/18

(54) **CASE FOR TABLET TERMINAL**

(30) Priority: 31.10.2024 JP 2024191770
(71) Applicant: a-freak Inc., Tokyo 171-0022 (JP)
(72) Inventor: Ushida, Ken, Toshima-ku, Tokyo, 171-0022 (JP)
(74) Representative: Hoffmann Eitle

(57) **Abstract**

[Problem] To realize a case for tablet terminal that makes a wired earphone usable without requiring a conversion adapter even if a tablet terminal is not equipped with an earphone jack.

[Solution] A first cover 2 includes: a frame 5 to cover an outer periphery of a tablet terminal and capable of holding the tablet terminal; a Type-C cable 6 to be electrically connected to a USB Type-C port of the tablet terminal; and a wiring board 8 mounted on the frame 5 and connecting the Type-C cable 6 and a flat cable 7 to each other. A second cover 3 includes: an external interface unit 9 mounted on a casing 11 and connected to the flat cable 7; and an earphone jack provided at the external interface unit 9. The flat cable 7 is arranged in such a manner as to cross a coupler while passing through the inside of the coupler 4.

## Description

### Technical Field

The present invention relates to a case for tablet terminal to be used while being attached to a tablet terminal (tablet-type computer device).

The "case for tablet terminal" mentioned in the present invention is synonymous with items generally called by names such as a "case for mobile terminal," a "cover for tablet terminal," and a "cover for mobile terminal," and include all of these items.

### Background Art

The tablet terminal is a multifunctional mobile terminal including a display having a substantially equal resolution to a compact notebook computer, and equipped with various functions such as reproduction of music and videos, Internet search, e-mails, browsing of electronic books, online meetings, document preparation, and spreadsheets.

Efforts have been made to use such multifunctional mobile terminals in educational fields such as schools. With the aim of enhancing the education ICT environment, the Ministry of Education, Culture, Sports, Science and Technology proposed the "GIGA school program" in 2019 intended to exploit the full potentials of teachers and students, and is promoting setup of high-speed and large-capacity communication networks at elementary and secondary schools and high schools throughout the country and preparation of one tablet terminal for one student.

The tablet terminal, intended for educational use, etc., a keyboard may be provided at a protective cover for preventing damage of the tablet terminal. Proposal has also been made to provide the protective cover for preventing damage of the tablet terminal with a mechanism for allowing the tablet terminal to be used in an upright state.

As an example, referring to a foldable computer cover according to Patent Literature 1, one side at the bottom of a tablet terminal is placed against a stop of a third panel provided with a keyboard to hold the tablet terminal in an upright state. Referring to a leather cover for tablet computer according to Patent Literature 2, a triangular support table is formed for fixing a front-side leather cover and a front-side substrate at an appropriate angle therebetween to hold a tablet computer in an upright state.

### Citation List

### Patent Literatures

Patent Literature 1: Japanese Patent Application Publication No. 2006-24178
Patent Literature 2: Japanese Examined Utility Model Registration Publication No. 3160806

### Non-Patent Literatures

Non-Patent literature 1: "2022 Apple 10.9-inch iPad (Wi-Fi, 64 GB)-Pink (10th generation), [online] Amazon, [searched on October 10, 2024] <https://amzn.asia/d/5LvG8Ta> on the Internet

### Summary of Invention

### Technical Problem

Tablet terminals are provided as products by a plurality of manufactures in Japan and overseas, and iPads^{®} are one of mainstream products well known to demanders. According to a policy made public in the second stage of the "GIGA school program" announced in April, 2024, OSs of tablet terminals to be used at school are to be selected from three types provided by overseas manufacturers, and one of these three options is an iOS^{®}.

New additional models of the iPad^{®} have been released so far. Meanwhile, Apple^{®} made an announcement in May, 2024 that Apple^{®} would stop concurrent selling with products in the previous generations having been done previously and would focus on selling of models of the latest generation in the future in markets including the Japanese market. Here, as shown in Non-Patent Literature 1, the iPad^{®} of the 10^{th}-generation as the latest generation is not equipped with an earphone jack at a body of the iPad^{®}, unlike those of the generations up to the 9^{th} generation.

Meanwhile, earphones are used in English listening classes at elementary and secondary schools, for example. Earphones are generally categorized into wireless earphones using Bluetooth^{®} and the like and wired earphones with cables. If used for educational purposes in a situation where a large number of students gather in one classroom, the wireless earphones might become crossed between tablet terminals used by different students. For this reason, using the wired earphones free from the concern about the crossing are required to be used in classes at school.

Hence, if the 10^{th}-generation iPad^{®} is employed as a tablet terminal to be used at elementary and secondary schools and high schools, etc., the absence of an earphone jack at a body necessitates the need to buy a conversion adapter additionally for the operation of the tablet terminal. For example, techniques such as those shown in Patent Literatures 1 and 2 have already been suggested conventionally as cases for tablet terminal. However, no technique to solve the foregoing problem has been found.

The present invention has been made in view of the circumstances described above. A first object of the present invention is to realize a case for tablet terminal that makes a wired earphone usable without requiring a conversion adapter even if a tablet terminal is not equipped with an earphone jack.

A second object of the present invention is to provide a case for tablet terminal having a configuration that excludes some problems in advance assumed to occur during use at elementary and secondary schools, etc. or overcomes such problems.

### Solution to Problem

A case for tablet terminal according to the present invention comprises:
a first cover having an opening part for exposing a display surface of a tablet terminal and allowing the tablet terminal to be housed therein;
a second cover covering the opening part of the first cover in a manner allowing the opening part to be opened and closed; and
a coupler coupling the first cover and the second cover to each other, wherein
the first cover includes:
   a frame to cover an outer periphery of the tablet terminal and capable of holding the tablet terminal;
   a Type-C cable to be electrically connected to a USB Type-C port of the tablet terminal; and
   a wiring board mounted on the frame and connecting the Type-C cable and a flat cable to each other,
   the second cover includes:
      a casing;
      a keyboard unit mounted on the casing and formed in a central part of the second cover;
      an external interface unit mounted on the casing and connected to the flat cable; and
      an earphone jack provided at the external interface unit, and
      the flat cable is arranged in such a manner as to cross the coupler while passing through the inside of the coupler.

In the present invention, a configuration described below can be employed.

The coupler may include: a first material forming a surface on a back side; and a second material forming a surface on a side opposite to the first material, the flat cable may be arranged in such a manner as to be interposed between the first material and the second material, and
a reinforcing member capable of increasing the tearing strength of the coupler may be attached between the first material and the second material.

The flat cable forming connection between the wiring board of the first cover and the external interface unit of the second cover may be a flexible printed board.

The Type-C cable may include an L-shaped connector part where a connector extends in a direction substantially orthogonal to a direction in which the cable extends, and the frame may be provided with an enclosure housing the L-shaped connector part.

The Type-C cable may be housed in such a manner as to extend along an inner side of a peripheral edge of the frame of the first cover.

The external interface unit may include a Type-C port usable for power feeding to the tablet terminal.

The frame may be to cover a speaker part provided at a side part of the tablet terminal using a side part of the frame, and may include a speaker hole for emitting sound externally output from the speaker part, the speaker hole being provided at a front edge of the frame and in the vicinity of the speaker part.

The frame may have an upper edge where a holder to hold a pen-type input device is provided, and the holder may include a protector to cover a pen tip of the pen-type input device in order to prevent the pen tip from being exposed to the outside.

The first cover may include:
a backplate unit to support a back side of the tablet terminal;
a lower fixed part fixed to the backplate unit; and an upper folding part separable from the backplate unit and bendable in an external direction about an upper end of the lower fixed part,
the backplate unit may be provided with a window part to make a part of a back-side surface of the tablet terminal visually recognizable when the upper folding part is folded back, and the window part may be configured to be covered with transparent resin.

### Advantageous Effects of Invention

At the case for tablet terminal according to the present invention, the first cover with the frame to hold the tablet terminal includes the Type-C cable to be electrically connected to the USB Type-C port of the tablet terminal, and the wiring board forming connection between the Type-C cable and the flat cable is mounted on the frame.

At the case for tablet terminal according to the present invention, the second cover with the keyboard unit provided at a central part of the casing includes the external interface unit connected to the flat cable, and the earphone jack is provided at the external interface unit.

The coupler coupling the first cover and the second cover to each other includes: the first material continuous with materials covering external sides of the first cover and the second cover; and the second material covering a surface on a side opposite to the first material and covering a surface on a side where the keyboard unit is formed, and the flat cable is arranged in such a manner as to be interposed between the first material and the second material.

A user to use the case for tablet terminal according to the present invention places the tablet terminal in the opening part of the first cover, and connects the connector of the Type-C cable located at the peripheral edge of the first cover to the USB Type-C port of the tablet terminal. By doing so, electrical connection is formed between the Type-C cable and the wiring board mounted on the frame of the first cover, between the wiring board and the flat cable arranged in such a manner as to cross the coupler, and between the flat cable and the earphone jack of the external interface unit located at the casing of the second cover.

Thus, by inserting a plug of a wired earphone into the earphone jack of the case for tablet terminal, the user becomes capable of hearing sound using the wired earphone output to the USB Type-C port of the tablet terminal.

### Brief Description of Drawings

Fig. 1 is a front view showing a case for tablet terminal in an opened state according to an embodiment.
Fig. 2(a) is a right side view and Fig. 2(b) is a right side view showing the case for tablet terminal in Fig. 1 (from which a Type-C cable is detached) in an opened state and a closed state respectively.
Fig. 3 is a back side view of the case for tablet terminal in Fig. 1.
Fig. 4 is a view taken from a back side direction showing internal configurations of a first cover and a second cover (from which a reinforcing member and a first material are detached).
Fig. 5(a) is an enlarged view of a wiring board in Fig. 4, and Fig. 5(b) is a sectional view of the wiring board in Fig. 4.
Fig. 6 is a view similar to Fig. 4 and showing a position of mounting the reinforcing member.
Fig. 7 is a view of the reinforcing member extracted from Fig. 6 and shown in an enlarged manner.
Fig. 8(a) shows the position of a coupler 4, and Fig. 8(b) is a longitudinal sectional view showing an internal configuration of the coupler.
Fig. 9 is a perspective view showing the case for tablet terminal viewed from diagonally behind while a stand unit is in an opened state.
Fig. 10 shows an electronic device in a state of use viewed transversely with the stand unit opened.
Fig. 11(a) and Fig. 11(b) show a front side and a back side of a tablet terminal respectively to be installed on the case for tablet terminal according to the embodiment.

### Description of Embodiments

An embodiment of the present invention will be described below in detail by referring to the drawings. The embodiment described below is an example of the present invention, and is not intended to limit the present invention, matters to which the present invention is applied, or scopes of usages thereof.

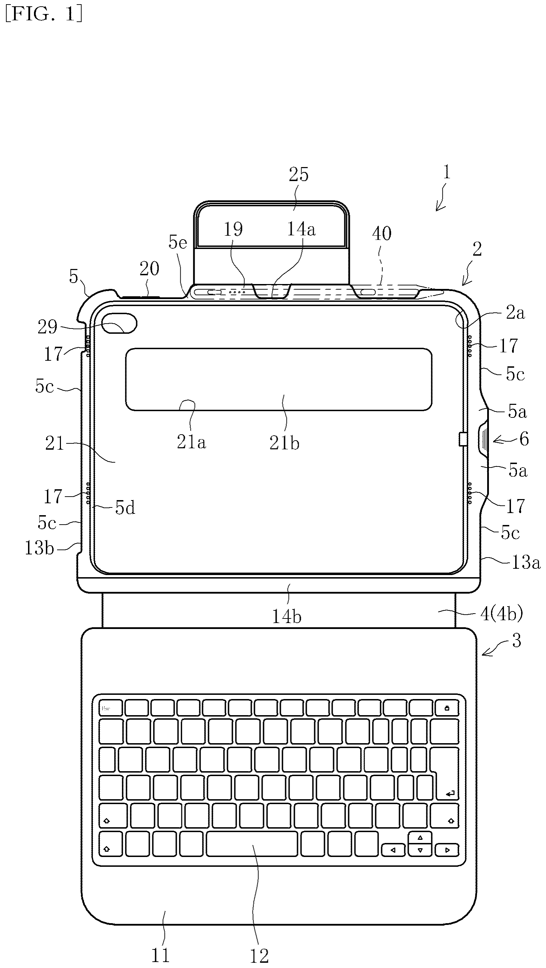

The present embodiment is a case 1 for tablet terminal assumed to be used in classes at elementary and secondary schools, etc. As shown in Figs. 1, 2, and 3, the case 1 for tablet terminal forms a unified case where a first cover 2 to house a tablet terminal 50 and a second cover 3 including a keyboard unit 12 are connected to each other via a coupler 4. The first cover 2 has an opening part 2a for exposing a display 51 of the tablet terminal 50 and allows the tablet terminal 50 to be housed in a frame 5.

In the present description, an entire assembly with the tablet terminal 50 installed on the case 1 for tablet terminal is collectively referred to as an electronic device 100. In the following, the configuration of the tablet terminal 50 will be described first before detailed description of the configuration of the case 1 for tablet terminal will be given.

### (Configuration of Tablet Terminal 50)

Specifically, the tablet terminal 50 is a 10^{th}-generation iPad^{®}. Thus, an earphone jack is absent in the tablet terminal 50.

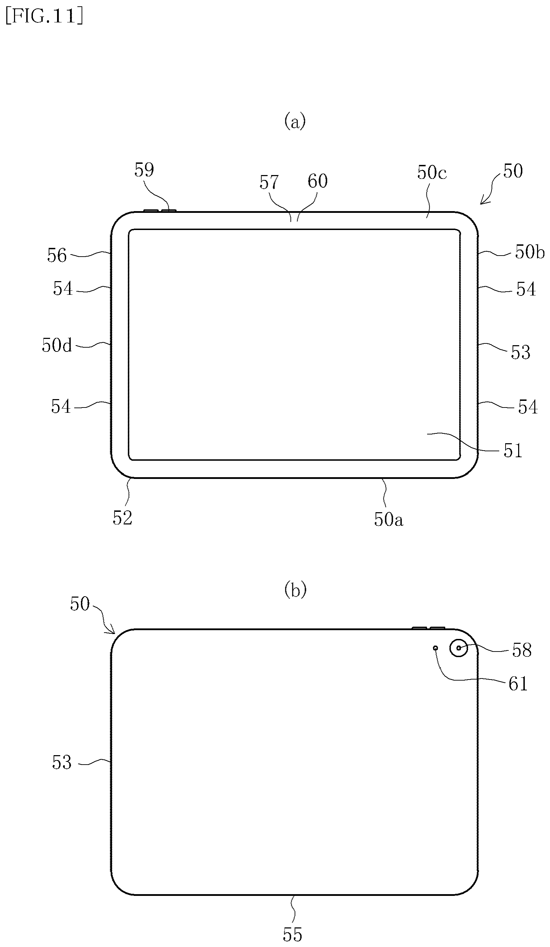

As shown in Fig. 11, the tablet terminal 50 is a rectangle in a plan view with four round corners. An outer shape of the tablet terminal 50 is a flat plate-like shape. The tablet terminal 50 has a front side equipped with a display 51. The display 51 is an LED backlight display. The display 51 corresponds to a display surface of the tablet terminal 50.

Many icons appear on the display 51 in an operating state. When a user touches an icon with a finger, an application associated with the icon is started. Various types of buttons and connectors are provided at an outer periphery 52 forming a side surface of the tablet terminal 50, a peripheral edge of the front side where the display 51 is arranged, and a peripheral edge of a back side of the tablet terminal 50.

The outer periphery 52 of the tablet terminal 50 has a USB Type-C port 53, speakers 54, a tablet port 55, a top button 56, and a volume button 59. With the tablet terminal 50 placed in a horizontally-long posture, the speakers 54 are provided at two positions including a position closer to the top and a position closer to the bottom of each of right and left side parts. With the tablet terminal 50 placed in a horizontally-long posture, the speakers 54 become located on the right and left to function like stereo speakers. The tablet port 55 is specifically a Smart Connector^{®}. The top button 56 is a button used for releasing the tablet terminal 50 from a sleep state or restoring the tablet terminal 50 to the sleep state. By pressing the top button 56 long, the tablet terminal 50 is powered on and off.

The USB Type-C port 53 and the speaker 54 are arranged on a right side 50b among the four sides of the outer periphery 52 of the tablet terminal 50. The top button 56 is arranged on a left side 50d among the four sides of the outer periphery 52 of the tablet terminal 50. The tablet port 55 is arranged on a lower side 50a among the four sides of the outer periphery 52 of the tablet terminal 50. The lower side 50a is a side to become located at a lower end of the tablet terminal 50 when the tablet terminal 50 is in an upright state, and the tablet port 55 is exposed at the lower side 50a. The volume button 59 is arranged on an upper side 50c among the four sides of the outer periphery 52 of the tablet terminal 50.

The peripheral edge of the front side of the tablet terminal 50 has a front-side camera 57 and a front-side microphone 60. The front-side camera 57 and the front-side microphone 60 are arranged side by side at a center of a peripheral edge of a surface where the display 51 is located, more specifically, at a center of an upper edge next to the upper side 50c.

A peripheral edge of the back side of the tablet terminal 50 has a back-side camera 58 and a back-side microphone 61. The back-side camera 58 is arranged at a corner of a surface where the display 51 is not present, more specifically, at a corner next to the left side 50d and the upper side 50c. The back-side microphone 61 is arranged in the vicinity of the back-side camera 58.

The tablet terminal 50 having the above configuration is installed on the frame 5 of the first cover 2 of the case 1 for tablet terminal to form the electronic device 100.

### (Principal Configuration of First Cover 2)

As shown in Figs. 1 to 4, the first cover 2 includes the frame 5, a Type-C cable 6, and a wiring board 8 connected to a flat cable 7.

The frame 5 is configured to cover the outer periphery 52 corresponding to the side surface of the tablet terminal 50 and to hold the tablet terminal 50. The frame 5 is connected to an outer edge of a back-side cover 22. The frame 5 is composed of a right lateral frame part 13a, a left lateral frame part 13b, an upper frame part 14a, and a lower frame part 14b. The frame parts face corresponding ones of the four sides of the outer periphery 52 of the tablet terminal 50.

The frame 5 is made of a thermoplastic polyurethane elastomer (TPU), so that it is both flexibly elastic like rubber and strong like plastic. As the frame 5 is elastically deformable, the tablet terminal 50 is mounted and removed easily. The frame 5 is capable of holding the tablet terminal 50 firmly and protects the surrounding of the tablet terminal 50. While the frame 5 is made of a thermoplastic polyurethane elastomer, it may be formed using a different elastomer.

The first cover 2 includes the Type-C cable 6 to be electrically connected to the USB Type-C port 53 of the tablet terminal 50.

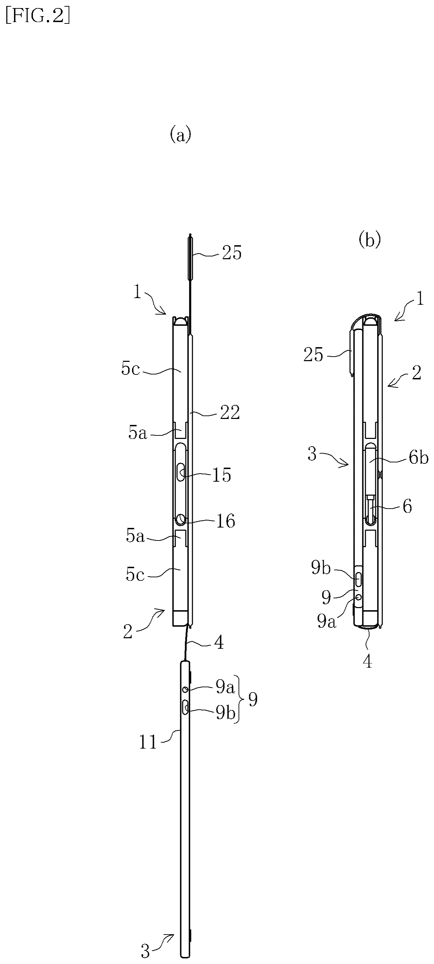

The right lateral frame part 13a of the frame 5 is configured to contact the right side 50b of the tablet terminal 50 and to cover the right side 50b. The right lateral frame part 13a has an inner peripheral surface formed as a recessed curved surface extending in a direction in which the right side 50b extends. As shown in Fig. 2(a), the right lateral frame part 13a has a connector hole 15 and a cable through hole 16. The cable through hole 16 is provided in the vicinity of the connector hole 15.

The connector hole 15 has a long hole shape penetrating the right lateral frame part 13a in a thickness direction thereof and extending in a direction in which the right lateral frame part 13a extends. The connector hole 15 is a hole for exposing the USB Type-C port 53 of the tablet terminal 50. The cable through hole 16 has a perfect circle shape penetrating the right lateral frame part 13a in the thickness direction thereof. The cable through hole 16 is a hole for letting a cable part of the Type-C cable 6 pass therethrough. The connector hole 15 and the cable through hole 16 are arranged in such a manner as to face the outer periphery 52 of the tablet terminal 50.

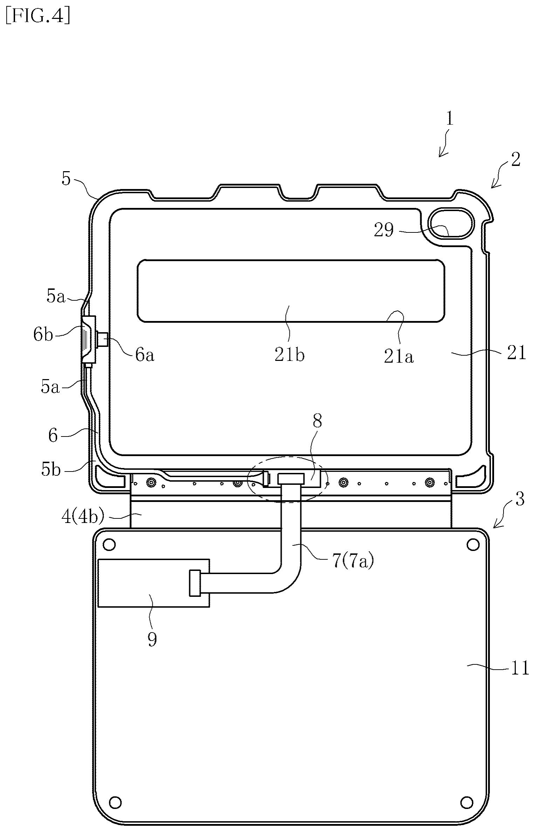

As shown in Fig. 4, the Type-C cable 6 is housed in such a manner as to extend along an inner side of a peripheral edge 5b of the frame 5. The Type-C cable 6 is mostly hidden inside the frame 5, so that the Type-C cable 6 is inconspicuous in appearance.

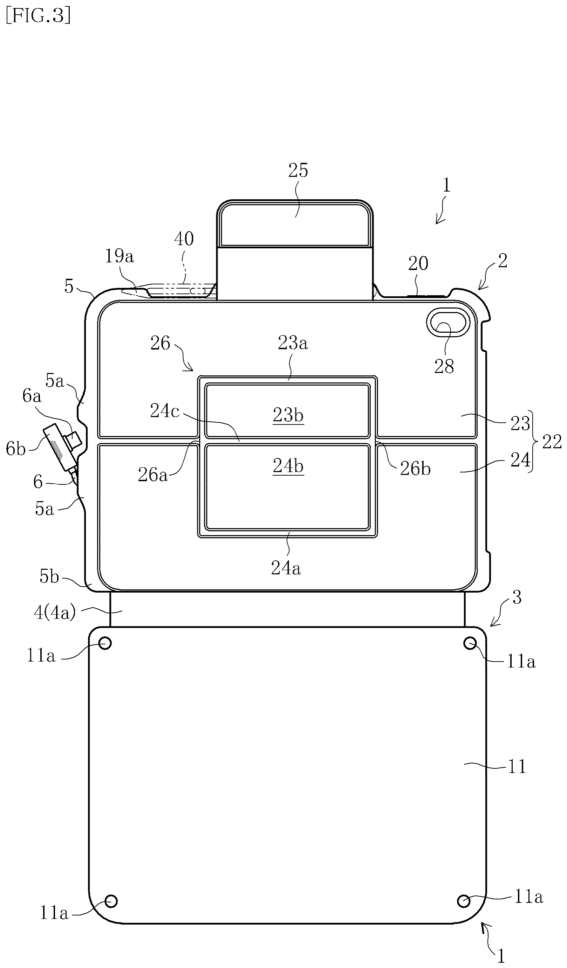

While the type-C cable 6 is mostly hidden inside the frame 5, it is exposed to the outside of the frame 5 only at a connector 6a, an L-shaped connector part 6b, and their vicinities. Thus, with the tablet terminal 50 kept installed on the first cover 2, the connector 6a can be inserted into and extracted from the USB Type-C port 53 by holding the L-shaped connector part 6b with a finger. Fig. 3 shows a state where the L-shaped connector part 6b is extracted.

Sufficient strength is obtained at the peripheral edge 5b of the frame 5. Thus, housing the Type-C cable 6 in such a manner that the Type-C cable 6 extends along the inner side of the peripheral edge 5b of the frame 5 is appropriate in terms of protection of the Type-C cable 6. More specifically, the Type-C cable 6 is housed in the peripheral edge 5b including a corner area of the frame 5.

The Type-C cable 6 includes the L-shaped connector part 6b where the connector 6a extends in a direction substantially orthogonal to a direction in which the cable 6 extends. By doing so, when the connector 6a of the Type-C cable 6 is inserted into the USB Type-C port 53 of the tablet terminal 50, the type-C cable 6 can be laid along the frame 5 without being bulged externally. As a result of the configuration of the Type-C cable 6 invisible in appearance, the case 1 for tablet terminal is capable of providing the electronic device 100 having a simple and smart design.

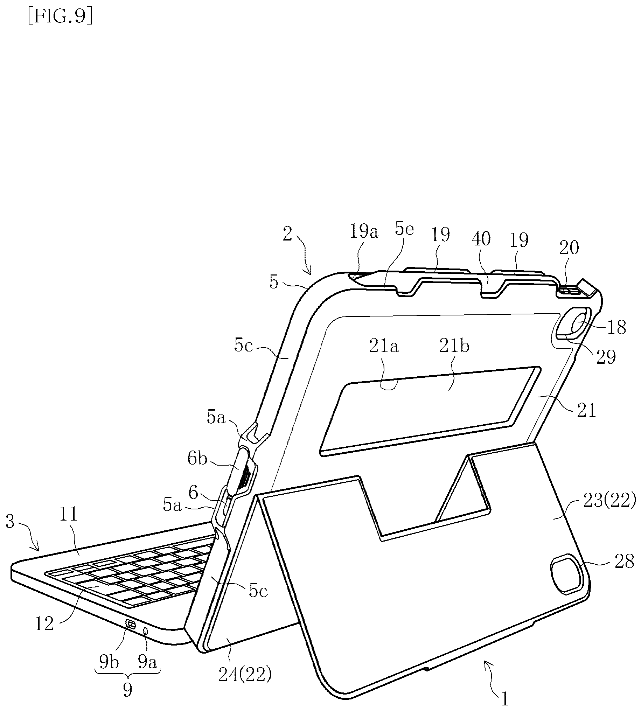

As shown in Figs. 3 and 9, the frame 5 is provided with an enclosure 5a housing the L-shaped connector part 6b of the Type-C cable 6. The enclosure 5a is a wall surrounding a periphery of the L-shaped connector part 6b. A part of the wall is cut out in consideration of convenience in holding the L-shaped connector part 6b with a finger during attachment and detachment thereof.

When the connector 6a is inserted into the USB Type-C port 53 of the tablet terminal 50, the L-shaped connector part 6b becomes surrounded by the wall of the enclosure 5a. The thickness of the L-shaped connector part 6b and that of the enclosure 5a are substantially equal to each other, thereby preventing the L-shaped connector part 6b from projecting. Thus, during use of the electronic device 100 with the connector 6a of the Type-C cable 6 inserted in the USB Type-C port 53 of the tablet terminal 50, an accident is prevented such as detachment of the connector 6a caused by a hand or the like of a student snagged on the L-shaped connector part 6b or drop of the electronic device 100 from a desk due to the snagging. Furthermore, application of excessive force to the connector 6a and resultant failure are avoided.

The left lateral frame part 13b of the frame 5 is configured to contact the left side 50d of the tablet terminal 50 and to cover the left side 50d. The left lateral frame part 13b has an inner peripheral surface formed as a recessed curved surface extending in a direction in which the left side 50d extends. The left lateral frame part 13b has a top button hole 18. The top button hole 18 is arranged in such a manner as to face the top button 56 of the tablet terminal 50.

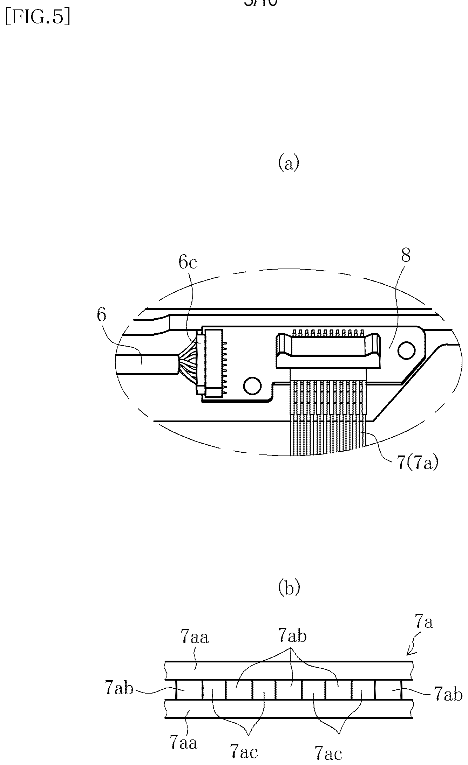

As shown in Figs. 4 and 5(a), the first cover 2 includes the wiring board 8 mounted on the frame 5 and connecting the Type-C cable 6 and the flat cable 7 to each other. The flat cable 7 is specifically a flexible printed board 7a.

The flexible printed board 7a is also called an FPC, and is a bendable printed board where conductors 7ab are arranged in a line between two thin insulating films 7aa with an adhesive 7ac placed between the conductors 7ab, as shown in Fig. 5(b). The insulating film 7aa is a polyimide-based plastic film, for example. The conductor 7ab is made of a material that is specifically coper foil. The adhesive 7ac is an epoxy-based adhesive, for example.

Inside the coupler 4 coupling the first cover 2 and the second cover 3 to each other, the flat cable 7 crosses the coupler 4. The flat cable 7 is arranged in such a manner as to cross the coupler 4 while passing through the inside of the coupler 4. A flexible flat cable (FFC) is also available as the flat cable 7, for example. Meanwhile, using the flexible printed board 7a has an advantage in terms of achieving excellent flexibility and flex resistance. While motion of bending the first cover 2 and the second cover 3 is repeated daily, using the flexible printed board 7a can provide resistance sufficient for sliding and bending in narrow space.

The wiring board 8 is arranged in the vicinity of the lower frame part 14b of the frame 5. The board 8 is connected with the other end side 6C, opposite from one end side where the connector 6a of the Type-C cable 6 is provided. The flexible printed board 7a is further connected to the wiring board 8. The wiring board 8 is a substrate to transfer a data signal between the Type-C cable 6 and the flexible printed board 7a.

As shown in Figs. 3 and 9, the first cover 2 includes a backplate unit 21 and the back-side cover 22. The backplate unit 21 is provided with a window part 21a.

The backplate unit 21 is formed using a polycarbonate (PC) material. The backplate unit 21 protects the back side of the tablet terminal 50. As the backplate unit 21 is made of polycarbonate, it has excellent resistance to impact. The back-side cover 22 is made of polyurethane (PU). The back-side cover 22 has a feel like a skin and a texture like natural leather. The back-side cover 22 is made of a polyurethane material unlikely to cause dirt attachment thereto and having a maximum possible static friction coefficient in order to reduce the risk of slipping from over a desk.

### (Configuration of Second Cover 3)

The second cover 3 includes a casing 11, the keyboard unit 12, and an external interface unit 9 connected to the flat cable 7.

As shown in Figs. 1 to 4, the second cover 3 covers the opening part 2a of the first cover 2 in a manner allowing the opening part 2a to be opened and closed. The second cover 3 includes the casing 11, and the keyboard unit 12 mounted on the casing 11 and formed in a central part of the second cover 3.

The casing 11 has a box-like shape and has housing space therein. While the casing 11 is made of ABS resin, it may be formed using a different type of plastic. An outer shape of the casing 11 is a flat rectangular solid shape. Rubber feet 11a for stabilizing the electronic device 100 placed on a desk or the like are attached at four positions at corners on a back side of the casing 11.

The keyboard unit 12 is located in a dish part of the second cover 3. The keyboard unit 12 has a plurality of keys and a back plate. These keys are aligned in a right-left direction and a front-back direction. The back plate is a part of the keyboard unit 12 located inside the casing 11 and used for supporting the keys.

The keyboard unit 12 receives power feeding from the tablet terminal 50 via the USB Type-C port 53.

The second cover 3 includes the external interface unit 9 mounted on the casing 11 and connected to the flat cable 7. The external interface unit 9 is a substrate equipped with terminals or ports for connection to external devices.

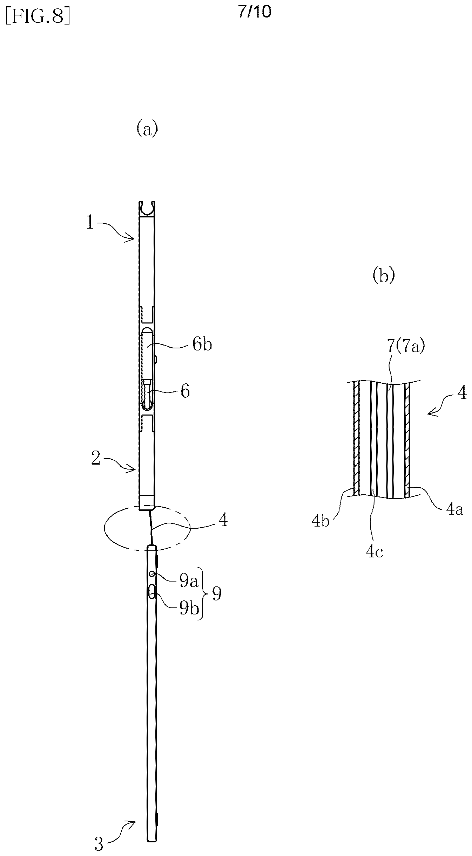

The case 1 for tablet terminal includes the coupler 4 coupling the first cover 2 and the second cover 3 to each other. As shown in Figs. 1, 3, and 8, the coupler 4 includes a first material 4a forming a surface on the back side (on the right side in the plane of sheet in Fig. 8) of the case 1 for tablet terminal, and a second material 4b forming a surface on a side (on the left side in the plane of sheet in Fig. 8) opposite to the first material 4a. The flat cable 7 is arranged in such a manner as to be interposed between the first material 4a and the second material 4b, and extends in a direction crossing a lengthwise direction of the coupler 4.

The external interface unit 9 includes an earphone jack 9a. A user who may be a student to use the case 1 for the tablet terminal places the tablet terminal 50 in the opening part 2a of the first cover 2, and inserts the connector 6a of the Type-C cable 6 into the USB Type-C port 53 of the tablet terminal 50 to form connection therebetween.

In doing this, at the electronic device 100, electrical connection is formed between the Type-C cable 6 and the wiring board 8 mounted on the frame 5 of the first cover 2, between the wiring board 8 and the flat cable 7 arranged in such a manner as to cross the coupler 4, and between the flat cable 7 and the external interface unit 9 mounted on the casing 11 of the second cover 3.

Thus, by inserting a plug of a wired earphone into the earphone jack 9a of the external interface unit 9, the user becomes capable of hearing sound using the wired earphone output to the USB Type-C port 53 of the tablet terminal 50.

By using the case 1 for tablet terminal, even if the tablet terminal 50 is a 10^{th}-generation iPad^{®} not equipped with an earphone jack at the body thereof, the student is still allowed to hear English listening using the wired earphone without using a conversion adapter.

### (Other Configurations)

The case 1 for tablet terminal has the following configurations 1) to 6) suitable for use in education at elementary and secondary schools in addition to the above configurations.
1): As shown in Fig. 2, the external interface unit 9 provided at the second cover 3 further includes a Type-C port 9b usable for power feeding to the tablet terminal 50. Inserting the connector 6a of the Type-C cable 6 into the USB Type-C port 53 of the tablet terminal 50 makes the Type-C port 9b of the external interface unit 9 operable. Thus, a user becomes capable of charging the tablet terminal 50 by inserting a charging cable into the Type-C port 9b.

In the absence of the Type-C port 9b, it is required to extract the connector 6a of the Type-C cable 6 from the tablet terminal 50 each time the tablet terminal 50 runs out of power, power-feed the tablet terminal 50 by inserting a charging cable into the USB Type-C port 53 of the body of the tablet terminal 50, extract the charging cable again if the tablet terminal 50 is fully charged, and insert the connector 6a of the Type-C cable 6 into the USB Type-C port 53.

If a user is a student at an elementary or secondary school, the user handles the device roughly. Hence, as the Type-C cable 6 is inserted and extracted more frequently, it becomes more likely that both or one of the USB Type-C port 53 of the body of the tablet terminal 50 and the Type-C cable 6 will be damaged. For this reason, it is preferable that the Type-C port 9b be provided further to the external interface unit 9 at the second cover 3. This makes it possible to reduce the frequency of inserting and extracting the connector 6a of the Type-C cable 6.

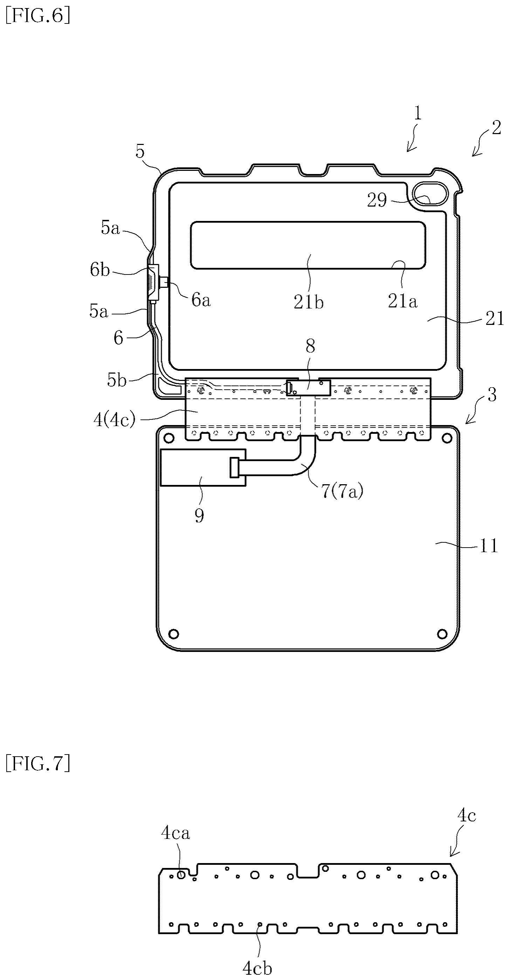

2): As shown in Figs. 6 to 8, the coupler 4 includes a reinforcing member 4c attached between the first material 4a and the second material 4b and capable of increasing the tearing strength of the coupler 4. The reinforcing member 4c is made of nylon, for example. As shown in Fig. 7, the reinforcing member 4c is a member having a horizontally-long rectangular appearance shape and having a length in a right-left direction substantially equal to that of the coupler 4. The reinforcing member 4c is provided with attachment holes 4ca and 4cb formed at opposite ends thereof in a top-bottom direction, and is fixed with screws to corresponding end parts of the first cover 2 and the second cover 3 using the attachment holes 4ca and 4cb.

As shown in Fig. 8(b), the first material 4a, the flat cable 7 (flexible printed board 7a), the reinforcing member 4c, and the second material 4b are arranged inside the coupler 4 in this order as viewed from the back side of the case 1 for tablet terminal. The reinforcing member 4c is interposed between the first material 4a and the second material 4b and is not visually recognized from outside. The reinforcing member 4c can improve the tearing strength of the coupler 4 considerably.

If a user is a student at an elementary or secondary school, the user handles the device roughly. This might apply tearing force to the coupler 4 located between the first cover 2 and the second cover 3. Providing the reinforcing member 4c can prevent damage of the coupler 4. Application of tearing force to the coupler 4 might also cause break of the flat cable 7 arranged inside the coupler 4. Increasing the strength of the coupler 4 by providing the reinforcing member 4c can also prevent break of the flat cable 7.

3): The frame 5 is configured to cover the speaker 54 provided at the side part of the tablet terminal 50 using a side part 5c of the frame 5 (see Fig. 9), and is provided with a speaker hole 17 for emitting sound externally output from the speaker 54 at a front edge 5d of the frame 5 and in the vicinity of the speaker 54 as shown in Fig. 1.

By doing so, the speaker 54 of the tablet terminal 50 becomes covered with the frame 5, making it possible to prevent entry of dust or water into the speaker 54. Meanwhile, as the speaker hole 17 is provided at a position in the vicinity of the speaker 54 and rotated 90 degrees from the speaker 54, a user to use the tablet terminal 50 can hear sound comparable to sound generally heard.

4): As shown in Fig. 9, the frame 5 has an upper edge 5e where a holder 19 to hold a pen-type input device 40 is provided. The holder 19 includes a protector 19a to cover a pen tip of the pen-type input device 40 in order to prevent the pen tip from being exposed to the outside. By doing so, when a student houses the pen-type input device 40 into the holder 19, the pen tip becomes covered with the protector 19a. Thus, the pen tip is not exposed to the outside, making it possible to prevent the student from being hurt with the pen tip.

The upper edge 5e of the frame 5 provided with the holder 19 corresponds to an upper surface of the upper frame part 14a of the frame 5. The upper frame part 14a is configured to contact the upper side 50c of the tablet terminal 50 and to cover the upper side 50c. The upper frame part 14a has a cutout 20 for volume button. The cutout 20 for volume button is located in such a manner as to face the volume button 59 of the tablet terminal 50.

5): As shown in Fig. 9, the first cover 2 includes the backplate unit 21 to support the back side of the tablet terminal 50, a lower fixed part 24 fixed to the backplate unit 21, and an upper folding part 23 separable from the backplate unit 21 and bendable in an external direction about an upper end 24c of the lower fixed part 24. The back-side cover 22 is composed of the upper folding part 23 and the lower fixed part 24. The back-side cover 22 has a quadrangular plate shape, specifically, a rectangular plate shape.

The backplate unit 21 is provided with the window part 21a to make a part of a back-side surface of the tablet terminal 50 visually recognizable when the upper folding part 23 is folded back. The window part 21a is covered with a transparent resin 21b. The resin 21b forming the window part 21a is transparent polycarbonate. Polycarbonate is a resin providing a high degree of transparency and having excellent resistance to impact.

Thus, while a sticker showing a registration number is affixed in many cases to the back side of the tablet terminal 50 at elementary and secondary schools, for example, it is possible to check the registration number with the tablet terminal 50 kept installed on the first cover 2.

The backplate unit 21 has a back-side camera hole 29. The back-side camera hole 29 is a hole having an oval shape penetrating the backplate unit 21 in a thickness direction thereof. The upper folding part 23 also has a back-side camera hole 28. The back-side camera hole 28 is a hole having an oval shape penetrating the upper folding part 23 in a thickness direction thereof. The back-side camera holes 28 and 29 have the same shape and the same size, and are both arranged in such a manner as to face the back-side camera 58 of the tablet terminal 50. As the back-side camera holes 28 and 29 have oval shapes, they allow the back-side microphone 61 to be exposed in the vicinity of the back-side camera 58 as well as exposing the back-side camera 58.

The case 1 for tablet terminal includes a locking tab 25 mounted on the upper end side of the first cover 2. The locking tab 25 is mounted with a magnet as locking means. As shown in Fig. 2(b), in putting the electronic device 100 into a housing state, the magnet adheres to a magnet not shown in the drawings mounted on the second cover 3 to maintain the housing state of the electronic device 100.

The locking tab 25 is further used in putting the electronic device 100 into an upright state during use of the electronic device 100, as will be described below.

6): As shown in Fig. 3, the case 1 for tablet terminal includes a stand unit 26 to become bendable toward the backplate unit 21 about a first bend line 23a provided at the upper folding part 23 and a second bend line 24a provided at the lower fixed part 24 when the upper folding part 23 is separated from the backplate unit 21. Cuts 26a and 26b extending in a top-bottom direction are formed at opposite ends of the stand unit 26 in a right-left direction. The stand unit 26 is composed of a first piece 23b and a second piece 24b, and is bendable along a boundary between the first piece 23b and the second piece 24b. The magnet capable of forming surface adhesion to the locking tab 25 is provided at the second piece 24b.

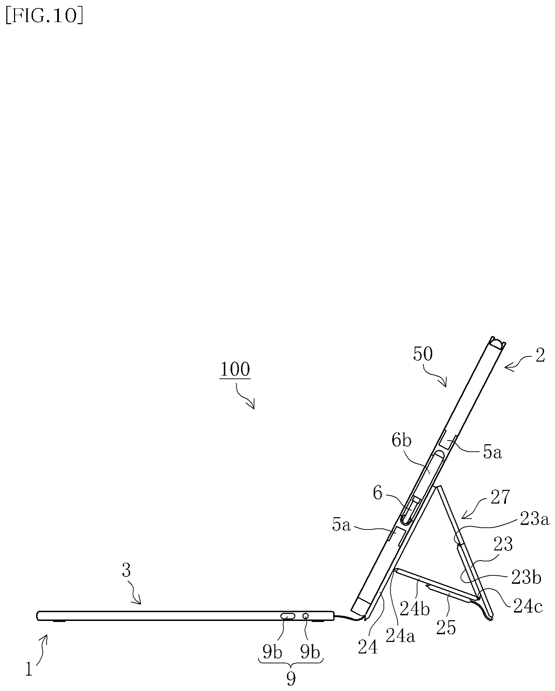

Thus, during use of the tablet terminal 50, the locking tab 25 and the second piece 24b of the stand unit 26 are caused to adhere to each other to maintain a triangular structure 27 defined by the upper folding part 23 and the first piece 23b, the second piece 24b and the locking tab 25, and the lower fixed part 24 as shown in Fig. 10, thereby holding the tablet terminal 50 in an upright posture installed on the first cover 2. The locking means provided at each of the locking tab 25 and the second piece 24b may be a hook and loop fastener.

According to the case 1 for tablet terminal of the present embodiment described above, when a user connects the connector 6a of the Type-C cable 6 to the USB Type-C port 53 of the tablet terminal 50, electrical connection is formed between the Type-C cable 6 and the wiring board 8, between the wiring board 8 and the flat cable 7, and between the flat cable 7 and the earphone jack 9a of the external interface unit 9.

Thus, when the user inserts a plug of a wired earphone into the earphone jack 9a of the case 1 for tablet terminal, the user becomes capable of hearing sound using the wired earphone output to the USB Type-C port 53 of the tablet terminal 50.

According to the present embodiment, the tablet terminal 50 is housed in the first cover 2 to be protected from drop impact, etc. Furthermore, even if the electronic device 100 is used for educational purposes at elementary and secondary schools, adding the above-described attentive configuration suppresses damage of the tablet terminal 50 and the case 1 for tablet terminal.

The present invention is not limited to the above examples but can certainly be implemented as modified embodiments, as appropriate, within a range of the technical idea described in each claim.

Specifically, the description of the embodiment given above shows preferred examples of the present invention, and embodiments other than the above can be employed using various methods. In particular, the present invention is not limited to the shapes, sizes, configurations, arrangements and others of the parts illustrated in the accompanying drawings unless the present specification includes a statement to the effect that such limitation should be imposed.

All the configurations described in the above embodiment may be combined, configurations may be added to those in the above embodiment, or the configurations in the above embodiment may be omitted or replaced with other configurations within a range not deviating from the purport of the present invention.

As an example, regarding the described configuration where the backplate unit 21 is provided with the window part 21a, the size of the window part 21a is not limited to that shown in Fig. 1, etc. but the window part 21a of a smaller size may be applied. The shape of the window part 21a is also not limited to a rectangular shape but may be an oval shape, for example.

In the described configuration, the reinforcing member 4c made of nylon is provided between the first material 4a and the second material 4b for the purpose of increasing the strength of the coupler 4. However, it is possible to employ a configuration where both the first material 4a and the second material 4b are made of nylon and the reinforcing member 4c is omitted.

### [Appendixes]

The configurations of the embodiment and the modifications described above including configurations other than those described in claims will be shown as appendixes.

### (Appendix 1)

The case 1 for tablet terminal comprising:
the first cover 2 having the opening part 2a for exposing the display surface 51 of the tablet terminal 50 and allowing the tablet terminal 50 to be housed therein;
the second cover 3 covering the opening part 2a of the first cover 2 in a manner allowing the opening part 2a to be opened and closed; and
the coupler 4 coupling the first cover 2 and the second cover 3 to each other, wherein
the first cover 2 includes:
   the frame 5 to cover the outer periphery 52 of the tablet terminal 50 and capable of holding the tablet terminal 50;
   the Type-C cable 6 to be electrically connected to the USB Type-C port 53 of the tablet terminal 50; and
   the wiring board 8 mounted on the frame 5 and connecting the Type-C cable 6 and the flat cable 7 to each other,
   the second cover 3 includes:
      the casing 11;
      the keyboard unit 12 mounted on the casing 11 and formed in a central part of the second cover 3;
      the external interface unit 9 mounted on the casing 11 and connected to the flat cable 7; and
      the earphone jack 9a provided at the external interface unit 9, and
      the flat cable 7 is arranged in such a manner as to cross the coupler 4 while passing through the inside of the coupler 4.

### (Appendix 2)

The case 1 for tablet terminal according to Appendix 1, wherein
the coupler 4 includes: the first material 4a forming a surface on a back side; and the second material 4b forming a surface on a side opposite to the first material 4a, the flat cable 7 is arranged in such a manner as to be interposed between the first material 4a and the second material 4b, and
the reinforcing member 4c capable of increasing the tearing strength of the coupler 4 is attached between the first material 4a and the second material 4b.

### (Appendix 3)

The case 1 for tablet terminal according to Appendix 1 or 2, wherein
the flat cable 7 is the flexible printed board 7a.

### (Appendix 4)

The case 1 for tablet terminal according to Appendix 1 or 2, wherein
the Type-C cable 6 includes the L-shaped connector part 6b where the connector 6a extends in a direction substantially orthogonal to a direction in which the cable 6 extends, and the frame 5 is provided with the enclosure 5a housing the L-shaped connector part 6b.

### (Appendix 5)

The case 1 for tablet terminal according to Appendix 4, wherein
the Type-C cable 6 is housed in such a manner as to extend along an inner side of the peripheral edge 5b of the frame 5.

### (Appendix 6)

The case 1 for tablet terminal according to Appendix 1 or 2, wherein
the external interface unit 9 further includes the Type-C port 9b usable for power feeding to the tablet terminal 50.

### (Appendix 7)

The case 1 for tablet terminal according to Appendix 1 or 2, wherein
the frame 5 is configured to cover the speaker 54 provided at the side part of the tablet terminal 50 using the side part 5c of the frame 5, and includes the speaker hole 17 for emitting sound externally output from the speaker 54, the speaker hole 17 being provided at the front edge 5d of the frame 5 and in the vicinity of the speaker 54.

### (Appendix 8)

The case 1 for tablet terminal according to Appendix 1 or 2, wherein
the frame 5 has an upper edge where the holder 19 to hold a pen-type input device is provided, and the holder 19 includes the protector 19a to cover a pen tip of the pen-type input device 40 in order to prevent the pen tip from being exposed to the outside.

### (Appendix 9)

The case 1 for tablet terminal according to Appendix 1 or 2, wherein
the first cover 2 includes:
the backplate unit 21 to support the back side of the tablet terminal 50;
the lower fixed part 24 fixed to the backplate unit 21; and the upper folding part 23 separable from the backplate unit 21 and bendable in an external direction about the upper end 24c of the lower fixed part 24,
the backplate unit 21 is provided with the window part 21a to make a part of a back-side surface of the tablet terminal 50 visually recognizable when the upper folding part 23 is folded back, and the window part 21a is formed using transparent polycarbonate.

### (Appendix 10)

The case 1 for tablet terminal according to Appendix 2, wherein
the reinforcing member 4c is made of nylon.

### (Appendix 11)

The case 1 for tablet terminal according to Appendix 1, wherein
the coupler 4 includes the first material 4a forming a surface on a back side, and the second material 4b forming a surface on a side opposite to the first material 4a, the flat cable 7 is arranged in such a manner as to be interposed between the first material 4a and the second material 4b, and
both the first material 4a and the second material 4b are made of nylon.

### (Appendix 12)

The case 1 for tablet terminal according to Appendix 1 or 2, wherein
the first cover 2 includes:
the backplate unit 21 to support the back side of the tablet terminal 50;
the lower fixed part 24 fixed to the backplate unit 21; and the upper folding part 23 separable from the backplate unit 21 and bendable in an external direction about the upper end 24c of the lower fixed part 24,
the case 1 for tablet terminal comprises the stand unit 26 to become bendable toward the backplate unit 21 about the first bend line 23a provided at the upper folding part 23 and the second bend line 24a provided at the lower fixed part 24 when the upper folding part 23 is separated from the backplate unit 21,
the stand unit 26 is composed of the first piece 23b and the second piece 24b having locking means, is bendable along a boundary between the first piece 23b and the second piece 24b, and is provided with the cuts 26a and 26b extending in a top-bottom direction and formed at opposite ends of the stand unit 26 in a right-left direction, and
the locking tab 25 having locking means mounted on the upper end side of the first cover 2 and the second piece 24b are caused to adhere to each other to maintain the triangular structure 27 defined by the upper folding part 23 and the first piece 23b, the second piece 24b and the locking tab 25, and the lower fixed part 24, thereby holding the tablet terminal 50 in an upright posture installed on the first cover 2.

### (Appendix 13)

The case 1 for tablet terminal according to Appendix 12, wherein
the locking means provided at each of the locking tab 25 and the second piece 24b is a magnet or a hook and loop fastener.

### (Appendix 14)

The case 1 for tablet terminal according to Appendix 1 or 2, wherein
the frame 5 has the connector hole 15 for exposing the USB Type-C port 53 of the tablet terminal 50, and the through hole 16 provided in the vicinity of the connector hole 15 and used for letting a cable part of the Type-C cable 6 pass therethrough, and the Type-C cable 6 is exposed to the outside of the frame 5 only at the L-shaped connector part 6b connector part 6b and its vicinity.

### (Appendix 15)

The electronic device 100 comprising: the case 1 for tablet terminal according to any one of Appendixes 1 to 14; and the tablet terminal 50 housed in the first cover 2.

### Industrial Applicability

While the present invention has been developed on the assumption of use for educational purposes at schools, cram schools, etc., the purpose of use thereof is not limited and is widely and generally available as a case with keyboard to cover a tablet terminal. As an example, the present invention is further available in commercial facilities such as various types of showrooms and front desks at offices.

### Reference Signs List

- 1: Case for tablet terminal
- 2: First cover
- 2a: Opening part
- 3: Second cover
- 4: Coupler
- 4a: First material
- 4b: Second material
- 4c: Reinforcing member
- 5: Frame
- Sa: Enclosure
- 5b: Peripheral edge
- 5c: Side part
- 5d: Front edge
- 5e: Upper edge
- 6: Type-C cable
- 6a: Connector
- 6b: L-shaped connector part
- 7: Flat cable
- 7a: Flexible printed board
- 8: Wiring board
- 9: External interface unit
- 9a: Earphone jack
- 9b: Type-C port
- 11: Casing
- 12: Keyboard unit
- 19: Holder
- 19a: Protector
- 21: Backplate unit
- 21a: Window part
- 21b: Transparent resin
- 22: Back-side cover
- 23: Upper folding part
- 24: Lower fixed part
- 40: Pen-type input device
- 50: Tablet terminal
- 51: Display
- 52: Outer periphery
- 53: USB Type-C port
- 100: Electronic device

## Claims

1. A case for tablet terminal comprising:
a first cover having an opening part for exposing a display surface of a tablet terminal and allowing the tablet terminal to be housed therein;
a second cover covering the opening part of the first cover in a manner allowing the opening part to be opened and closed; and
a coupler coupling the first cover and the second cover to each other, wherein
the first cover includes:
a frame to cover an outer periphery of the tablet terminal and capable of holding the tablet terminal;
a Type-C cable to be electrically connected to a USB Type-C port of the tablet terminal; and
a wiring board mounted on the frame and connecting the Type-C cable and a flat cable to each other,
the second cover includes:
a casing;
a keyboard unit mounted on the casing and formed in a central part of the second cover;
an external interface unit mounted on the casing and connected to the flat cable; and
an earphone jack provided at the external interface unit, and
the flat cable is arranged in such a manner as to cross the coupler while passing through the inside of the coupler.

2. The case for tablet terminal according to claim 1, wherein
the coupler includes:
a first material forming a surface on a back side; and
a second material forming a surface on a side opposite to the first material,
the flat cable is arranged in such a manner as to be interposed between the first material and the second material, and
a reinforcing member capable of increasing the tearing strength of the coupler is attached between the first material and the second material.

3. The case for tablet terminal according to claim 1 or 2, wherein
the flat cable is a flexible printed board.

4. The case for tablet terminal according to claim 1 or 2, wherein
the Type-C cable includes an L-shaped connector part where a connector extends in a direction substantially orthogonal to a direction in which the cable extends, and the frame is provided with an enclosure housing the L-shaped connector part.

5. The case for tablet terminal according to claim 4, wherein
the Type-C cable is housed in such a manner as to extend along an inner side of a peripheral edge of the frame.

6. The case for tablet terminal according to claim 1 or 2, wherein
the external interface unit further includes a Type-C port usable for power feeding to the tablet terminal.

7. The case for tablet terminal according to claim 1 or 2, wherein
the frame is configured to cover a speaker part provided at a side part of the tablet terminal using a side part of the frame, and includes a speaker hole for emitting sound externally output from the speaker part, the speaker hole being provided at a front edge of the frame and in the vicinity of the speaker part.

8. The case for tablet terminal according to claim 1 or 2, wherein
the frame has an upper edge where a holder to hold a pen-type input device is provided, and the holder includes a protector to cover a pen tip of the pen-type input device in order to prevent the pen tip from being exposed to the outside.

9. The case for tablet terminal according to claim 1 or 2, wherein
the first cover includes:
a backplate unit to support a back side of the tablet terminal;
a lower fixed part fixed to the backplate unit; and an upper folding part separable from the backplate unit and bendable in an external direction about an upper end of the lower fixed part,
the backplate unit is provided with a window part to make a part of a back-side surface of the tablet terminal visually recognizable when the upper folding part is folded back, and the window part is formed using transparent resin.
